# EUROPEAN PATENT SPECIFICATION

(11) **EP 3 114 926 B1**
(45) Date of publication and mention of the grant of the patent: **12.06.2019**
(21) Application number: 16177689.3
(22) Date of filing: 04.07.2016
(51) Int. Cl.: A01K 61/00, A61D 7/00

(54) **DEVICE AND METHOD FOR REMOVING PARASITES ON FISH**
VORRICHTUNG UND VERFAHREN ZUR ENTFERNUNG VON PARASITEN AN FISCHEN
DISPOSITIF ET PROCÉDÉ POUR L'ÉLIMINATION DE PARASITES SUR DES POISSONS

(30) Priority: 10.07.2015 NO 20150910
(43) Date of publication of application: 11.01.2017
(73) Proprietor: Mowi Norway AS, 5835 Bergen (NO)
(72) Inventor: ØREN, Frank, 7970 Kolvereid (NO); GRØNTVEDT, Odd Einar, 7160 Bjugn (NO)
(74) Representative: Protector IP AS

(56) References cited:
- WO-A1-98/24304
- WO-A1-2012/148283
- WO-A1-2014/184766
- WO-A1-2015/043603
- NO-B1- 301 440

## Description

### FIELD OF THE INVENTION

The present invention relates to removal of parasites on fish, especially parasites on salmon.

This is achieved by transporting the fish in water or fluid, substantially horizontally and substantially oriented opposite the direction of the water current.

### BACKGROUND OF THE INVENTION AND PRIOR ART

Parasites on farmed fish in general and salmon in particular have been recognized as a serious problem in the fish farming industry for several decades. Today, the parasite *Lepeotheirus salmonis* (*L.salmonis*) costs the global salmon industry several billion NOK each year, with costs steadily increasing due to higher treatment frequencies and mortalities related to treatment and handling.

There are major challenges associated with the control of sea lice and other parasites on fish, related for instance to logistical-, ethical, ecological- and financial issues, while most importantly also having a major effect on fish health and welfare. It is, and has long been, common to use different chemical agents to combat lice and other parasites. The use of chemical agents such as e.g. pyrethroids, organophosphates, flubenzurones or H2O2 has a number of adverse side effects, both to the fish and the surrounding environment. What is more, lice are becoming increasingly less sensitive to the current available chemical compounds, and most sub-populations of lice are showing reduced sensitivity or have developed resistance towards the majority of the common agents. In some areas lice are effectively multi-resistant with no available effective compounds presently available to remove them. A solution to such development is often to increase the dosage of the relevant drug or use several drugs in combination, which in turn can affect both fish health due to lower margins of toxicity of the drugs when not used according to the prescription, or due to the repeated treatment and handling of fish in short time spans. The increase in treatment dosage may itself further progress the development of resistance since you effectively select increasingly more tolerant lice in a rapid tempo, until only those lice that have developed complete resistance to the drug remains in the population after which the drug is no longer effective.

Due to resistance developing in an alarming rate, there is a very strong need for effective alternatives, and in many areas the only realistic option is the use of non-medicinal methods that do not drive resistance further to treat fish against parasite infestations.

Other non-medicinal treatments are for instance the use of freshwater, treatment by flushing with water under high pressure in combination with brushing, or the treatment of fish with lukewarm water.

Publication NO304171 shows a system for removing parasites from fish where the fish is led through a water current where it is exposed to a water spray-jet sprayed from nozzle heads or nozzle slits. The fish is transported with the head first in a cleaning pipe which means that the water has to be flushed towards the fish under high pressure in order to remove the parasite as the parasite is more tolerant / resilient to forces acting on it from front of the parasite than forces acting from behind. It is indicated in the publication that the pressure could be approximately 140 bar, which would cause injuries to the fish during treatment, as for example scales loss, or wounds or gill damages/bleeding.

In publication NO20130687 it is shown a system for removing of parasites by flushing the fish with a mixture of gas bubbles in a water stream.

It is stated in the publication that "in tests it has been found that the presence of gas bubbles in the cleaning water that is directed towards the surface of the fish has a favorable effect in the removal of the multicellular ectoparasites that have a carapace. One of the reason for this favorable effect may be that the admixture of gas bubbles in the cleaning water causes the pressure on the carapace of the multicellular ectoparasites to provide a suction cup of the carapace against surface of the fish. In particular with regard to the group of ectoparasitic crustaceans to which sea lice belong, this effect is easy to see. The pressure between the inside of the carapace and the surface of the fish corresponds to the water and pressure conditions when the fish are in a net. The fish, together with water, are pushed in the transport system because of the lower pressure that is there. When the pressure in the water surrounding the fish is reduced, a pressure difference is obtained between the ambient pressure and the pressure that is confined between the inside of the carapace and the skin of the fish. The difference in pressure gives a net force with direction which helps the sea lice to become dislodged from the surface of the fish. This net force increases substantially when gas is added to the water. On the admixture of gas, for example, air or oxygen, to the water, the specific gravity of the mixture is reduced. The gas will acceleratingly expand as the mixture is lifted to a higher level. Gas that is dissolved in the water at atmospheric pressure will effervesce and require more space under the carapace when the surrounding pressure falls."

There are clearly some mistakes in this description on how the gas dissolved in water is effective in dislodging the parasites, for instance it is stated that the presence of gas bubbles in the cleaning water causes a suction cup but it is the parasites itself that provides the feature of this suction cup and the presence of gas bubbles have no added effect on the removal of the parasites.

The fish in the publication are transported further into a new net cage where the parasite are separated from the fish in a filter bag placed under water and in the pen itself. In this publication the system requires an ejector pump to safely transport the fish through the system and the system must therefore be closed with no breaks in the water column throughout the system. The separation of water must therefore be performed at or below the water surface which is less effective than a separation chamber where all of the water is separated from the fish in the separation unit.

In this publication the ejector pump controls all the transport of the fish as well as the treatment process.

In the present invention there are no requirements of using an ejector pump and there could be one or more openings in the water column in the system. The fish and water parasite mixture is effectively separated in the separation unit where substantially all the water is removed from the fish.

It is thus a requirement to have an upwardly bending pipe to ensure a water lock and preventing the system from running dry. An elevation of the separation unit above the treatment chamber and also the filter unit is also beneficial for the flow of water by gravity from the separation unit to the filter unit.

Separate pump systems that can be regulated independently are a requirement of the safe treatment and transportation of the fish through the system and are one of the reasons why here it is no requirement or desire to use the ejector pump as in the previous system.

NO332298 also relates to a system for removing parasites on fish. In this system, the water is removed in the first step and in the last step of the system. The water is supplied by a pump into the system intermediate two de-waterers and the fish is transported to the bottom of a U-shaped pipeline where the treatment process (lukewarm water) is performed. A disadvantage with this system is that there could be less circulation of the water since the water may remain in the U-shaped pipeline with detrimental effects to water quality and the method may represent a great strain on fish, especially those that are weakened for some reason. The fish could also be stuck in the U-shaped pipeline and thereby taking severe damage by prolonged exposure to temperatures close to or above their ultimate lethal temperature (34 degrees).

This disclosure is based on a simple biological principle: The parasite is, as is also the fish, streamlined to a large degree when viewed from an anterior position. This provides the parasites great capability of resisting forces acting upon them in an anterior-posterior direction (e.g. through a water current) as opposed to their relatively higher vulnerability should the forces act upon them in a posterior-anterior direction. In the latter, parasites would detach much more easily with relatively less forces provided to their posterior body, by means of water at low pressure that lifts their posterior body from the host and thus disrupting their mode of attachment (vacuum) to such an extent that they detach from the host immediately. They do however not die in this process, and all water from the system is therefore filtered before it returns to the sea, and all parasites are destroyed in the process.

### SUMMARY OF THE INVENTION

The present disclosure relates to a system for removing parasites on fish flowing in a transport pipe from an inlet to an outlet, said system comprising a main pump, at least one treatment chamber, a separation unit fluidly coupled to a filter unit and an intermediate pipeline, said intermediate pipeline is arranged between the treatment chamber and the separation unit, said treatment chamber comprising at least one outlet for drainage of water and at least one inlet for injection of water, said inlet is arranged downstream said outlet. The disclosure is distinctive in that the separation unit is situated in a plane and said at least one treatment chamber is situated in a plane, said plane is higher than said plane so that the intermediate pipeline having an upward inclination in the downstream direction.

The separation unit is situated at a higher elevation than the at least one treatment chamber

This provides an efficient and gentle removal of the parasites from the fish without need of a closed system (and an ejector pump). This provides also an effective removal of lice from the fish in that substantially all the transport water is removed from the fish before it is dropped into a new net cage or similar storage system for the fish.

This provides also a system where gravity could effectively be used to transport the water mixture away from the fish and from the separation unit into the filter unit.

Upwards sloping intermediate pipeline is conditional for maintaining the water in the system by creating a water lock to preserve the water column in the system.

The treatment chamber comprises a drainage unit adapted to remove at least part of water in the system and an injection unit adapted to inject water into the system, said at least one injection unit is arranged downstream the drainage unit.

This provides an efficient and gentle removal of parasites from the fish with supply of water with a low pressure. This reduces injury or damage on the fish as is the case when the fish is flushed with high pressure water.

There is no need of supplying oxygen or gas into the system.

This provides also a system where the amount of water in the system is maintained at a constant level.

A drainage unit arranged upstream of the injection unit is conditional to create a "water-curtain" around the fish as it passes through the injection unit in which lice are removed by means of water applied at perpendicularly and at low pressure/large amounts (as opposed to the standard water jets that uses high pressure/small amounts of water.

Preferably, said intermediate pipeline has a gradient of substantially 45 degrees upwardly in relation to the plane through the at least one treatment chamber.

This provides a water lock in the system and prevents the pipeline in the system from running dry. This also provides a system which could be open in contrast to the previous systems where cleaning water is flushed into the system with low pressure. The system could therefore have one or more broken column of water where there are no water present in the system.

Preferably, the drainage unit has a perforated inner tube. This provides a gentle solution for the transport of the fish where the openings in the perforated plates are small enough to prevent the parts of the fish being dragged of the drainage unit and get stucked before entering the injection unit. This is a problem with the existing solutions where there are arranged ribs. The perforated openings must also be large enough to effectively remove the water from the drainage unit.

Preferably, the system has at least three independently operated pumps, at least one main pump coupled to the transport pipe, at least one drainage pump coupled to the at least one drainage unit and at least one injection pump coupled to the at least one injection unit.

This provides a system where the flow of fish through the system could be adjusted independently of both the water drained from the system in the drainage unit and the water injected in the injection unit.

This provides a system where the fish could be transported gently through the system without using an ejector pump because the waterflows could easily be adjusted independently by the pumps

Preferably, the at least one drainage unit is fluidly coupled to the filter unit. This provides a system where the any parasites present in the water current before the main treatment of the fish are separated from the water.

Preferably, the at least one treatment chamber further comprises an inspection unit coupled to the drainage unit.

This provides a system that monitors the fish in the system to ensure a safe transportation of the fish, this also ensure that there are an appropriate number of fish in the system in order to obtain an efficient cleaning of the fish.

Preferably, the separation unit has a plurality of ribs extending from an inlet of the separation unit to an outlet of the separation unit, said ribs having gaps smaller than the thickness of the fish.

This provides an easy and effective removal of the water and parasite -mixture from the fish. Substantially all water is drained through the ribs while the fish are transported further along the ribs towards the outlet.

Preferably, the ribs has longitudinal tubular shape.

This provides a gentle separation system for the fish, with minimum of risk of damage to the fish since the fish is travelling substantially without water in the separation unit.

Preferably, the system has a hose attached to the main pump for supply of fish into the transport pipe, said hose having a funnel coupled to the hose.

This provides an easy supply of the fish into the system and also allows the fish to rotate into the natural swimming direction of the fish with the tail entering the hose first. This also provides a system where the fish is led one at a time through the system.

Preferably, the system has a counting device.

This provides means for counting the amount of fish in the transport pipe in a certain amount of time.

Preferably, the at least one inspection unit has transparent circular part.

This provides a transparent glass where it is easy to inspect or monitor the fish that passes before it enters the drainage unit.

Preferably, said at least one drainage unit has a camera and/or a light.

This provides visual information about the speed and positioning of the fish before entering the injection unit, and also makes it possible to visualize the "curtain" of water by adding a colored fluid if needed for quality assurance.

Preferably, the injection unit has a plurality of slots fluidly coupled to a water supply.

This provides a system for supplying water into the transport pipe with a low pressure and that the formation the slots creates cover the entire circumference of the injection unit.

A plurality of slots are arranged in a circle of slots around the circumference of the injection unit, said slots being staggered relative to each other in the circumferential transverse direction.

This provides a system for evenly distributing the water into the transport pipe at low pressure because the slots cover in principle the whole inner tube of the injection unit and thus also the whole circumference of the fish.

At least two zones of slots are arranged in parallel around the circumference of the injection unit.

This provides a system where the water current or treatment water supplied into the system creates a "curtain".

Preferably, system further comprising a fish outlet coupled to the separation unit, said fish outlet having an additional supply of water into the system.

This provides a gentle transporting of the fish in the fish outlet with water free of parasites.

Preferably, the diameter of a second end of the intermediate pipeline is enlarged towards the inlet of the separation unit.

This provides a reduction in the speed of the fish into the separation unit.

The invention relates to a system for removing parasites on fish flowing in a transport pipe from an inlet to an outlet, said system being defined in claim and comprising a main pump, at least one treatment chamber, a separation unit fluidly coupled to a filter unit, said treatment chamber comprising at least one drainage unit for removal of water and at least one injection unit for injection of water, said at least one injection unit is situated downstream the drainage unit. The invention is distinctive in that said injection unit having a plurality of slots arranged in said at least two slots zones around the circumference of the injection unit, said slots being staggered relative to each other in the circumferential transverse direction.

This provides a system where the injected water covers the entire surface of the fish passing through the injection unit and facilitating highly effective removal of parasites.

Preferably, said slots being evenly spaced in the slots zones.

Preferably said circle of slots being arranged in parallel around the circumference of the injection unit.

The invention also relates to a method according to claim 10 for removing parasites from the surface of fish, said fish in a transport pipe through a system from an inlet to an outlet, said system comprising a main pump, at least one treatment chamber, a separation unit fluidly coupled to a filter unit, said treatment chamber comprising at least one drainage unit for removal of fluid and at least one injection unit for injection of water, said method comprising the following steps:
a) Supplying transportation water to the system by a main pump,
b) Removing a part of the water from the system in the at least one drainage unit by at least one drainage pump,
c) Injecting water into the system in the at least one injection unit by at least one injection pump,
d) Separating the water and parasite mixture from the fish in the separation unit, said separation unit is situated at a higher elevation than the at least one treatment chamber,
e) Separating the water from the parasites in the filter unit, said filter unit is fluidly connected to the separation unit.

Preferably the steps further comprise b) and c) are repeated in additional drainage unit(s) and injection unit(s) upstream the separation unit.

Preferably, the steps further comprise at least one component visual inspection of the fish upstream the at least one drainage unit.

Preferably, the steps further comprise supply of fluid subsequent to the separation unit downstream the system.

Preferably, water is supplied through a plurality of slots arranged in the injection unit, said water is supplied with a pressure between 1.0-5.0 bar.

Preferably, the water is supplied through at least two circles of slots in the injection unit said slots in the at least two circles of slots being staggered relative each other in the circumferential transverse direction.

Preferably, said drainage of water from the drainage unit is filtrated in the filter unit.

Preferably an embodiment of the system has the injection pump adapted to allow continuous cavitation.

Various other objectives and advantages of the present invention will become apparent to those skilled in the art as a more detailed description is set forth below.

### BRIEF DESCRIPTION OF THE DRAWINGS

The present invention will now be more particularly described by way of examples only, with reference to the accompanying drawings, in which:
Figure 1 shows an embodiment of the cleaning system according to the invention, three-dimensional view.
Figure 2 shows an embodiment of the cleaning system according to the invention, topside view.
Figure 3 shows an embodiment of the cleaning system according to the invention, side view.
Figure 4a-c shows an embodiment of inspection unit according to the invention, viewed from different angles.
Figure 5a-g shows an embodiment of the drainage unit according to the invention, viewed from different angles.
Figure 6a-f shows an embodiment of the injection unit according to the invention, viewed from different angles.
Figure 7a-c shows the course of water into the injection unit from figure 6a-h, illustrated with injection of the treatment water through each of the slot zones and combined.
Figure 8a-g shows an embodiment of the separation unit of the invention, viewed from different angles.
Figure 9 shows a principle, simplified sketch of the cleaning process according to the invention.

The dimensions on the figures are illustrative examples of an embodiment of the invention and are not limiting the invention.

### DETAILED DESCRIPTION

In this application parasites relate to all types of external parasites or lice as for example *Lepeoptheirus* spp and *Caligus* spp.

The term "fish" relates to all types of fish that could be affected by external parasites, such as for example salmon.

The components of the system are described according to the direction of flow, i.e. the direction from the inlet where fish enter the system from a net cage, to the outlet of the system where fish re-enters another net cage. The direction of flow is indicated in the figures by an arrow.

The wording "downstream" refers to the direction of the arrow, the wording "upstream" refers to the opposite direction.

The wording "transport pipe" is referred to as a collective term of the whole inner route or distance the fish is moved through the system.

There are throughout the disclosure defined two specific water identities in the system.

One water identity that is transported together with the fish in the system is termed "transport water". The purpose of this water is to transport the fish gently through the transport pipe and through substantially the length of the system. A second water identity is the water supplied into the system and used in the process of cleaning of the fish. This is termed "treatment water".

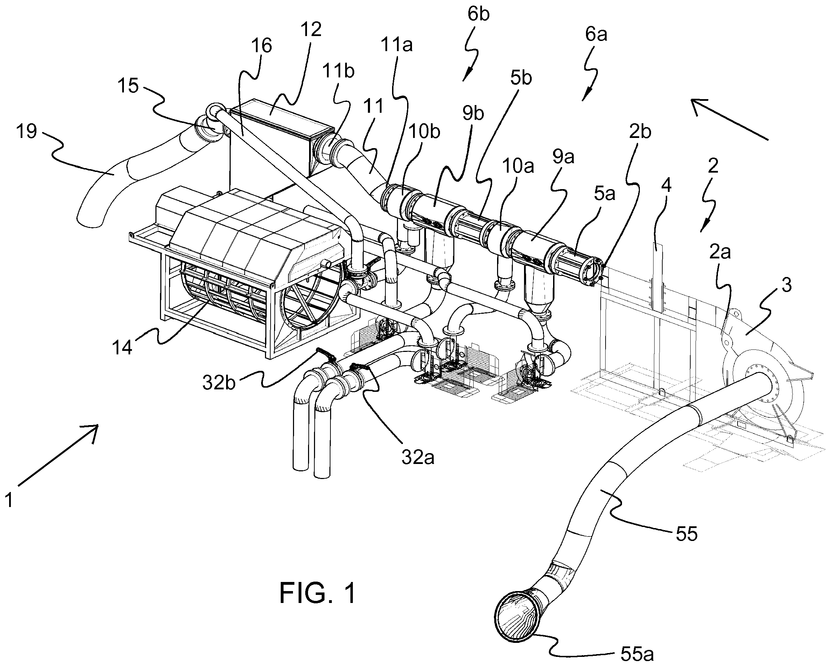

The figures 1-3 show an example of an embodiment of the cleaning system 1 according to the invention. The system comprising a first pipeline 2 with an inlet 2a and an outlet 2b. The first pipeline 2 is a part of the transport pipe that transports fish from one net-cage or pen to another.

The transport pipe is divided into separate sections, comprising of different devices, chambers (this will be further described below) or other parts that have the purpose of allowing inspection and removal of parasites from the fish. The inlet 2a of the pipeline 2 is fluidly coupled to a loading hose 55, tube or similar and a main pump 3 for circulating water and fish through the transport pipe in the system. The free end of the loading hose 55 is submerged in the net cage. The loading hose 55 having a custom-made funnel 55a in the free end. This funnel 55a allows even larger fish of 7-8 kg as well as small fish to turn itself around so that its tail comes first before the fish enters the system. As the normal swimming direction of salmon is countercurrent, the substantially all the fish will orient itself in this position as it is transported through the system while swimming against the flow of the transport water. (But of course cannot swim out of the system due to the magnitude of transport water that carries the fish.)

The invention can handle fish up to at least 6 kg. The design of the funnel is therefore important to avoid that large fish are drawn crosswise into the loading-hose resulting in fish being back-broken.

The funnel 55a further comprising a check valve (not shown) or non-returning valve for safe and easy starting and stopping of the main pump 3 preventing fish from remaining in the hose 55 or the pump house, or from entering it after the main pump 3 has been stopped, thus preventing clogging of the loading hose 55 with subsequent damage on the fish when the main pump 3 is again turned on.

The main pump 3 is fluidly coupled to the loading hose 55 and the first pipeline 2 at the inlet 2a in order to push water and fish through the system 1. The main pump 3 could for instance be an AquaLife BP120 fish pump with a capacity of 750 m³ water/hour and transport of 80 tons of fish per hour. This represents just an example of a suitable pump. Other pump arrangements are also possible like e.g. large-capacity vacuum pumps. The purpose or condition is that the main pump 3 should be suitable for an open-system arrangement (this implies that the return-hose does in principle not need to end in water for the main pump 3 to function as the main pump 3 pushes water through the system independently.

The system is not suitable for an ejector pump which requires a closed system with both the loading-hose/inlet end and the return-hose/outlet end are submerged in water since the ejector pump requires negative pressure on the suction side to create the movement of water.

Preferably, the flow rate is in a range between 1.5 - 3.0 m/s but other flow ranges are also possible.

The size or dimension of the inner diameter of the first pipeline 2 could for instance be 12 inches, but other inner diameters of the pipeline are also possible embodiments of the invention.

An electromagnetic flow-meter or other devices for the measuring of flow-rates (not shown) could be arranged in the first pipeline 2 to measure the speed of water flowing through the system.

In connection with the first pipeline 2, there is arranged a counting device 4 that counts the fish that are transferred to the first pipeline 2 in a certain amount of time.

In the figure 1 the counting device 4 is arranged halfway between the inlet 2a and outlet 2b of the pipeline 2 but other arrangements suitable for counting the fish are possible embodiments of the invention.

In the embodiment shown in the figures 1-3, there are arranged two treatment chambers, hereinafter named a first treatment chamber 6a and a second treatment chamber 6b. The treatment chambers 6a, 6b are arranged adjacent each other in the system. Each of the treatment chamber comprising one injection unit 10a, 10b, one drainage unit 9a, 9b. The treatment chamber could also optionally comprise one inspection unit 5a, 5b.

The first and second treatment chambers 6a and 6b are similar to each other and the individual components of one of the treatment chamber 6a, 6b will be described further in the following.

The system could have only one treatment chamber 6a, 6b or more than two treatment chambers 6a, 6b arranged after each other downstream in the transport pipe. This being embodiments of the invention and depends on desired length of the entire system.

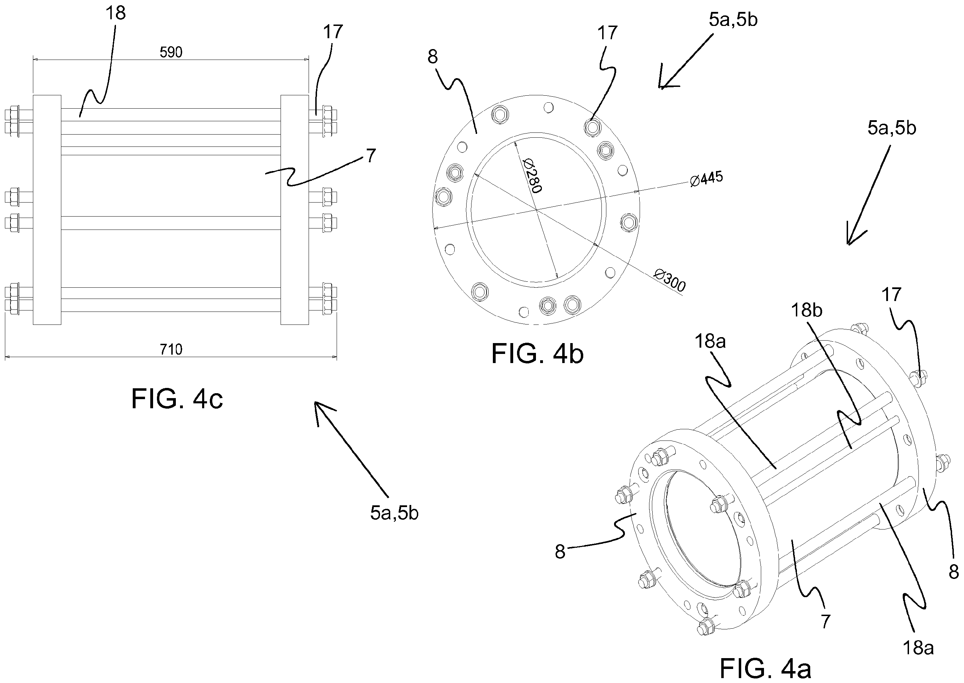

The first pipeline 2 is at the outlet 2b preferably coupled to a first inspection unit 5a. The inspection unit 5a, 5b is shown in detail in Figure 4a-c. The figures shows a perspective view (Figure 4a), an end view (Figure 4b) and a side view of the first inspection unit 5a (Figure 4c).

The inspection unit 5a 5b having a visible cylindrical transparent part 7 surrounding the transport pipe. This transparent part 7 could be made of plexiglass or similar material, like poly-methyl-methacrylate or other transparent thermoplastics.

At each transparent part ends, there are arranged flanges 8 adapted to be coupled to the outlet 2b of the first pipeline 2 in one end and to the drainage unit 9a, 9b in the opposite end.

The flanges 8 and the transparent part 7 could be coupled together by rods 18a and nuts as illustrated in Figure 4a. The rods 18a are evenly distributed around the circle defining the flanges 8. The rods 18a are extending between the flanges 18a and through holes in the flanges 8 to keep the flanges in the suitable distance from each other to lock the transparent part between the flanges 8. There could also be arranged additional rods 18b as shown in the figure. The rods 18a, 18b having threads at each of the ends corresponding with the nuts 17.

The inspection units 5a, 5b are optional embodiments of the invention, and when present it is arranged upstream the respective drainage units 9a, 9b to monitor the amount of fish through the system at any point in time. The inspection unit 5a, 5b enable the operators to attend to the well-being of the fish at all times and prevent excessive amounts of fish building up in the system by adjusting quickly the amount of fish based on visual information.

The purpose of the first inspection unit 5a, 5b is to supervise or monitor the amount of fish present in the transport pipe before the treatment of the fish happens. It is thus possible to adjust continuously the amount of fish that is entering the system to optimize flow of fish through the transport pipe and especially before the treatment of the fish.

The drainage unit 9a, 9b is arranged between the inspection unit 5a, 5b and the injection unit 10a, 10b in the transportation direction of the fish as indicated by the arrow in the Figure 1-3. The drainage unit 9a, 9b could as an optional embodiment be coupled directly to the pipeline end 2b if the inspection unit 5a, 5b is not present.

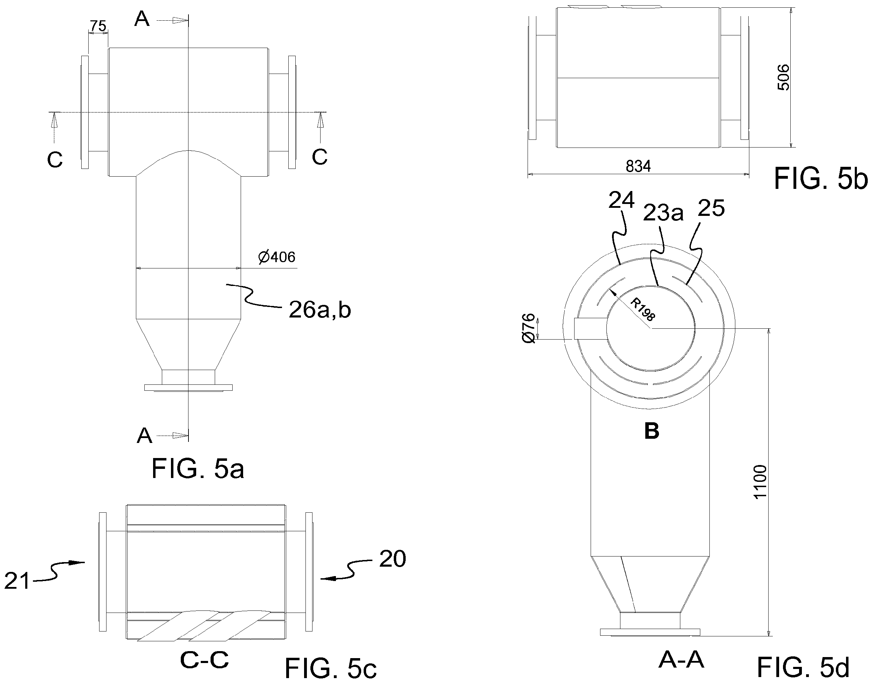

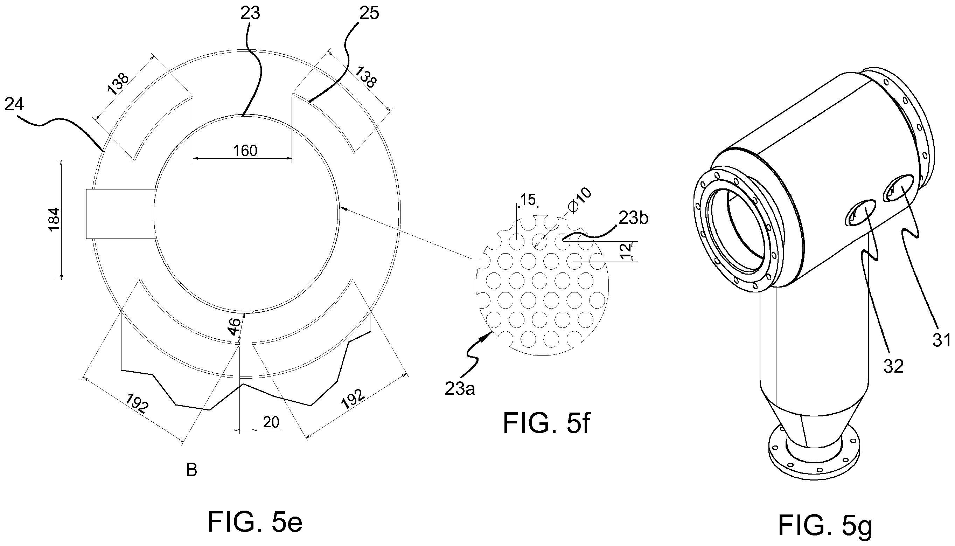

The drainage unit 9a, 9b is shown in further detail in Figure 5a-g.

Figure 5a -c shows the drainage unit 9a, 9b, viewed from the side. The drainage unit 9a, 9b comprising an outer tube 24 with a fish inlet 20 and a fish outlet 21 for transportation of fish.

At the inside of the outer tube 24 there is arranged an inner tube 23a (shown in figure 5d-f). This inner tube 23a is a part of the transport pipe. The inner tube 23a is perforated with small circular openings 23b throughout the whole inner tube 23a of the drainage unit 9a, 9b. The inner tube 23a is arranged coaxially with the outer tube 24. The diameter of the openings in the inner tube 23a could for instance be approximately 10 mm, but other dimensions could are also possible embodiments of the invention.

Between the perforated inner tube 23a and the outer tube 24, there are arranged a suitable number of plates 25 (Figure 5d-e) that ensure even removal of water around the surface of the perforated inner tube 23a.

The outer tube 24 has a vital function as a drainage chamber for the drained water that flows from the transport pipe through the inner perforated tube 23a and secure the water column in the transport pipe.

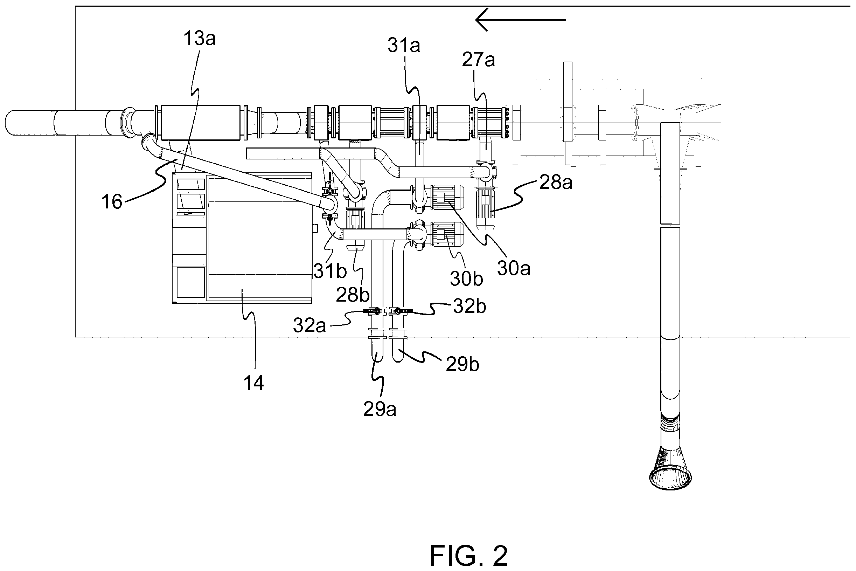

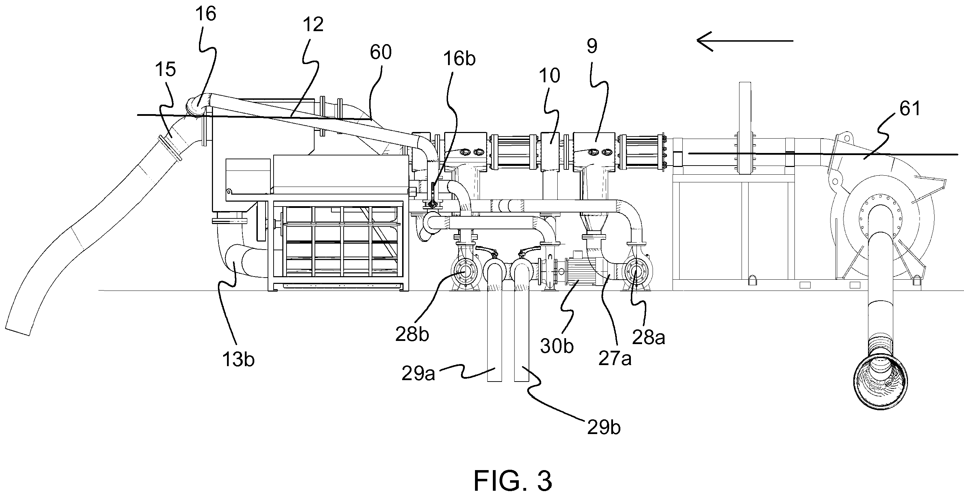

In the bottom of the drainage unit 9a, 9b there is arranged an outlet to actively remove water from the drainage unit 9a, 9b. This is shown as a circular tube 26a, 26b arranged perpendicular to the inner tube 23a and the outer tube 24. This discharge tube 26a, 26b could be integrated with the outer tube 24 or attached to the outer tube 24 in other ways, like bolted, welded or similar. The discharge tube 26a, 26b is coupled to a drainage pump 28a, 28b(figure 2, 3) with minimum capacity of 300 m³/hour. This drainage pump 28a, 28a draws water actively out from the drainage unit 9a, 9b before the fish is subsequently transported to the injection unit 10a, 10b.

All the pumps (both the drainage pumps 28a, 28b and later described injection pumps 30a, 30b as well as the main pump 3 in the system could preferably have frequency converters so that the amount of water that flows out of the drainage unit 9a, 9b or into the injection unit 10a, 10b or similar could be kept stable and constant to not influence the flow of the fish in the system. The fact that the main pump 3 and the drainage pumps 28a, 28b and the injection pumps 30a, 30b of the treatment chamber are separate, ensures that the flow of fish through the system can be adjusted independently of the a) water drained from the system in the drainage unit 9a, 9b, and b) the water injected in the injection unit 10a, 10b.This provides a more flexible and reliable system than a system with one main pump like an ejector pump is both transporting the fish through the system and removing some of the water from the system.

The purpose of this drainage unit 9a, 9b is both to reduce the amount of water and the speed of the water before the fish reaches the injection unit 10a, 10b thus obtaining an efficient delousing-effect of the fish..

The water that is drained from the drainage unit 9a, 9b is transported to a filter unit 14 (shown in Figure 1-3) in order to remove any parasites that is present in the drained water.

The discharge tube 26a, 26b arranged in connection with each of the drainage units 9a, 9b are shown in Figure 1-3. Pipelines 27a, 27b are extending between each of the discharge tubes 26a, 26b and the filter unit 14, fluidly connecting the discharge unit 9a, 9b and the filter unit 14. As mentioned earlier there could also be only one treatment chamber 6a and thus only one drainage unit 9a and one discharge tubes 26a or more than two in the system, each of the drainage systems having separate drainage pumps 28a, 28b and pipelines 27a, 27b extending to the filter unit 14 for the transport of water from the drainage unit 9a, 9b to the filter unit 14. This is especially shown in Figure 1 and 3.

The drainage unit 9a, 9b could also have light 31 and camera 32 arranged in the outer tube 24 in order to further monitor the situation in the transport pipe while the fish is passing the drainage unit 9a, 9b and further into the injection unit 10a, 10b where the treatment of the fish takes place.

The constant monitoring of the fish is important both for ensuring the health and well-being of the fish during treatment as deviations from optimal operation can quickly be discovered and attended to, as well as for maintaining the efficiency and speed of the fish through the system through ensuring visual information assisting in keeping a steady flow of fish through the system. The camera 32 and the light 31 provides also information on the positioning of the fish when entering the injection unit 10a, 10b since the fish need to be treated singly and to pass along with its tail first.

The drainage unit 9a, 9b in the embodiment shown in the figure is 0,78 m long. Preferably the drainage unit 9a, 9b could be between 0,5 and 1,5 m long but other lengths than this range are also possible embodiments of the invention. The injection unit 10a, 10b is situated downstream the drainage unit 9a, 9b. The fish in the transport water are entering the injection unit 10a, 10b after passing through the drainage unit 9a, 9b. The position of both units 9a, 9b and 10a, 10b in relation to each other are shown in figure 2, and is conditional for the invention to have the desired function and effect on removal of the parasites.

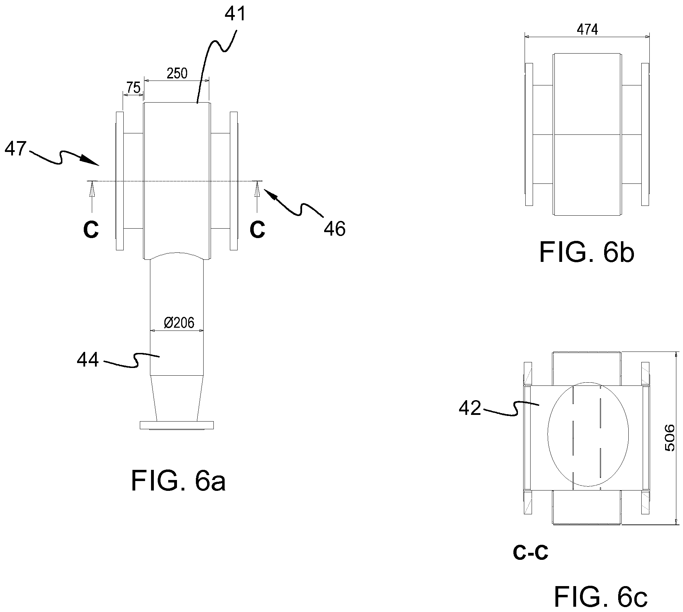

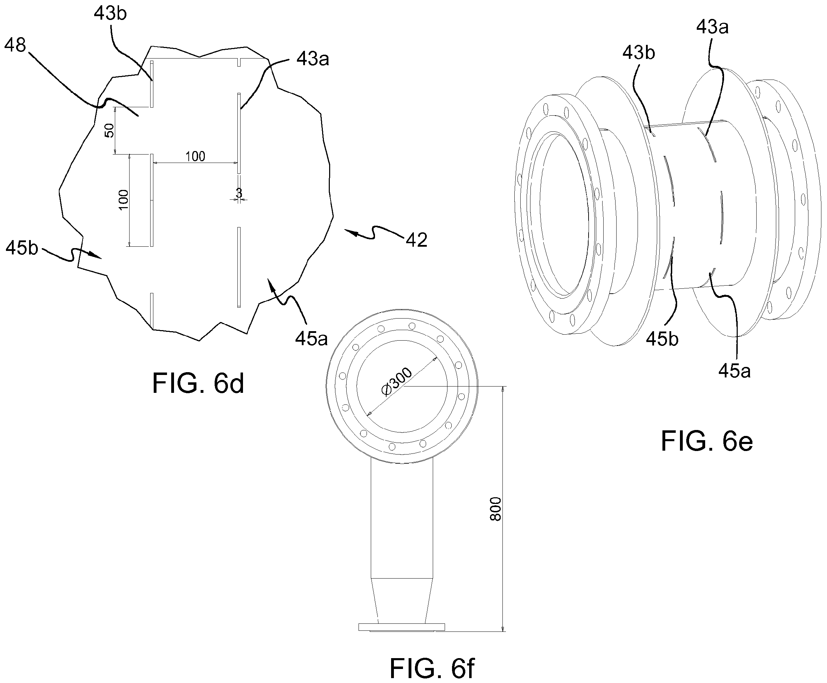

The injection unit 10a, 10b is shown in further detail in figure 6a-f. Figure 6a-cc shows the injection unit viewed from the side with a fish inlet 46 and a fish outlet for transport of the fish.

The injection unit 10a, 10b comprising an outer tube 41 and in relation to this, a coaxially arranged inner tube 42. The inner tube 42 having longitudinally oriented slots 43a, 43b distributed on the inner tube 42
Figure 6c-e shows the slots 43a, 43b in further detail evenly arranged in two circles, hereinafter called a first slot zone 45a and a second slot zone 45b along the surface of the inner tube 42. There must be some space between the slots 43a, 43b in one slot zone 45a, 45b to maintain the tube in one whole piece. The two zones 45a, 45b are complementary so that the whole cross-sectional area of the inner pipe, except a small circle in the middle of the pipe, is covered by a "curtain" of water. This will be described further.

Figure 6d shows this principle where the slots in the two zones 45a, 45b are displaced in relation to each other in along the inner tube 42. This means that the slots 43a in the first slot zone 45a and the slots 43b in the second slot zone 45b are not arranged parallel in the transverse direction.

In total there are four slot zones 45a, 45b shown in the embodiment of the figures. Two slot zones in the each of the injection units 10a, 10b.

Other arrangements of the slot 43a, 43b or slot zones 45a, 45b are also possible within the scope of claim 1. This depends on the desired lengths of the injection unit and the total number of treatment chambers in the system.

Preferably there could be between 2-20 slot zones in total in the system.

Each slot 43a, 43b could for instance be 45X3 mmm, preferably, the length of the slot could be between 20 and 200 mm and have a width between 1 and 10 mm but other ranges are possible.

It is a criteria that the slot 43a, 43b is a narrow, lengthy opening in the inner tube, and that the water applied to the fish have low pressure.

A supply tube 44 (Figure 6a and f) is attached to the outer tube 41 to supply water into the injection unit 10a, 10b through an inlet in the injection unit 10a, 10b. The supply tube 44 could be integrated with the outer tube 41 or attached to the outer tube 41 by other means like bolted, welded or similar. The figures show the supply tube 44 arranged at the bottom of the injection unit 10a, 10b but other arrangements are also possible embodiments of the invention.

The supply tube 44 is further coupled to an arrangement for supply of water into the injection unit 10a, 10b.This could preferably be water pumped through pipelines directly from the sea by one or more injection pumps 30a, 30b (figure 2. 3). The injection pumps 30a, 30b have a capacity of at least 300 m³/hour. The said injection pumps may be of such size and functionality that it allows the provoking of continuous cavitation in the pump itself without it losing function. Cavitation may happen by disallowing the pump as much water as mechanically optimal through e.g. reducing the opening of the inlet-valve to the pump. This will provoke the water-pressure within the pump to fall below the waters' own vapor-pressure thus stimulating formation of gas bubbles from gases originally dissolved in water in a process that is termed a phase-transition. As the water pressure again increases above the waters' own vapor-pressure when water leaves the pump 30a, 30b and enters the injection unit 10a, 10b and is further injected into the transport pipe, said gas bubbles will implode. This implosion may serve to maintain lice suspended in the transport water after they have been removed through contact between said gas-bubbles and detached lice. This ensures that they do not re-infect the fish when passing through the rest of the transport pipe, but does not add to the removal effect of the method. Further, the simple addition of air or other gases to the system will not provide a similar effect since they will dissolve in water or be carried out of the system relatively faster than bubbles formed by cavitation / implosion. It will also be difficult to add gases separately to the system in sufficient amounts as to replicate the magnitude of gas-bubbles created by cavitation / implosion.

There is an individual water supply arrangement to each of the injection units 10a, 10b present in the system as shown in the figure 2 to provide a regulation of each of the unit independent of each other. A first sea pipeline 29a, 29b is coupled to the water/injection pump 30a 30b further coupled a second sea pipeline 31a, 31b. (figure 2) The second sea pipeline 31a, 31b is in the opposite end coupled to the supply tube 44a, 44b. There could also be arranged non-return valve 32a, 32b in the supply arrangement to maintain the desired injection pressure, and to prevent unintentional pressure buildup in the injection unit 10a, 10b between the outer tube 41 and the inner tube 42 of the injection unit 10a, 10b.

If the water pressure for the injected treatment water is too high, this may cause damage to the fish.

There are in the Figures 1-3 also shown a water supply pipeline 16 extending from the water supply system 29a, 29b, 30a, 30b, 31a, 31b towards the outlet of the separation unit 12. This will be further described.

The supplied water is injected through the slots 43a, 43b to the inside of the inner tube 42, defined as part of the transport pipe itself. There is a large amount of water supplied through the slots 43a, 43b into the transport pipe where the fish is transported. The water is supplied with at least a capacity of 300 m³/hour. This water is supplied substantially perpendicular to the transport pipe and thus also substantially perpendicular to the direction of the fish being transported. Preferably the supply water should have an injection pressure between1-5 bar, most preferable the injection pressure should be 1-1,2 bar. The low injection pressure provides a gentle parasite or lice treatment of the fish.

The outer tube 41 acts as a pressure chamber between the outer tube 41 and the inner tube 42 where the water can build up some pressure before it is forced through the slots 43a, 43b.

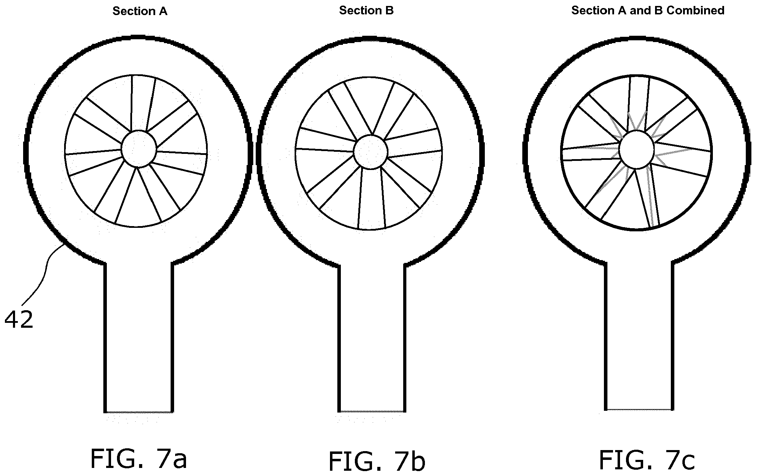

Figure 7a shows a sectional view along the first slots zone 45a from figure 6d, 6f. This figure illustrates the course of water of the treatment water as it flows through the first slot zone 45a.

Figure 7b shows a sectional view along the second slot zone 45b from Figure 6d, 6f. This figure illustrates the course of water of the treatment water as it flows from the pressure chamber through the second slot zone 45b.

These watercourses together creates a "curtain" of water surrounding the fish towards a circular center 47 of the transport pipe comprising the water and fish transported through the system as shown in figure 7c. The diameter of this circular center 47 depends on the injection pressure (increasing pressure results in a smaller diameter, a reduced pressure results in a larger diameter), and also of the amount of water that is removed in the drainage unit 9a, 9b (A large amount of water removed results in a smaller diameter, a small amount of water results in a larger diameter). If there is no water removed upstream the injection unit 10a, 10b, this "curtain" will disappear due to the, for this purpose, too high flow rate of the transport water, and the injected treatment water will be dragged immediately away together with the fish and water in the transport pipe without forming a "curtain" formation cross-sectional in the transport pipe, and thus no treatment of the fish will happen.

The injection unit 10a, 10b in the embodiment shown in the figure is 0,4 m long. Preferably the injection unit 10a, 10b is between 0,3 and 1,5 m long, but other lengths than this range are possible embodiments of the invention.

The second treatment chamber 6b is further connected to a second pipeline 11 as shown in the figure 1 at a first end 11a of the second pipeline 11. This second pipeline 11 is arranged with an angle of substantially 45° relative the plane 61 (figure 3) through the transport pipe in the at least one treatment chamber 6a, 6b. The second pipeline11 is 45° upward sloping. Other angles are also possible as long as they are upwardly sloping. The angles or gradient must also not be too steep in order to prevent the fish from butting or get injured in the second pipeline 11. The gradient must also not be too slow either to prevent that the water is running out of the system.

This upward sloping second pipeline 11 has two main functions. The second pipeline 11 function to provide a water lock by maintaining the water column in the system 1 and thus preventing the system 1 from emptying both under normal operation and under deliberate or accidental shut-downs.

This angled second pipeline 11 is further beneficial for the separation of water from the fish in the next step of the system as a plane 60 through a separation unit 12 (further described below) is situated above the plane 61 through the at least one treatment chamber 6a, 6b. The separated water mixture could by help of gravity be led to a filter unit 14 for further separation and destruction of the parasites.

The diameter of the second pipeline 11 is increased to a larger diameter at a second end 11b (figure 1) facing away from the at least one treatment chamber 6a, 6b. This second end 11b is coupled to the separation unit 12. The diameter towards the second end of the pipeline 11b could be increased for instance by 2 inches, but other increments are also possible embodiments of the invention. This is illustrated in the figure 1-3. In the figures, the second end 11b is a separate funnel-shaped pipe section 11b that is bolted to the second pipeline11, but the second end 11b could also be an integrated part of the second pipeline 11. The increased diameter towards the second end of the pipeline 11b results in reduced flow rate of the water and consequently also reduced speed of the fish upstream upon entering the separation unit 12. This speed reduction is beneficial to avoid that the fish are thrown with excessive force out of the pipeline and into the separation unit 12.

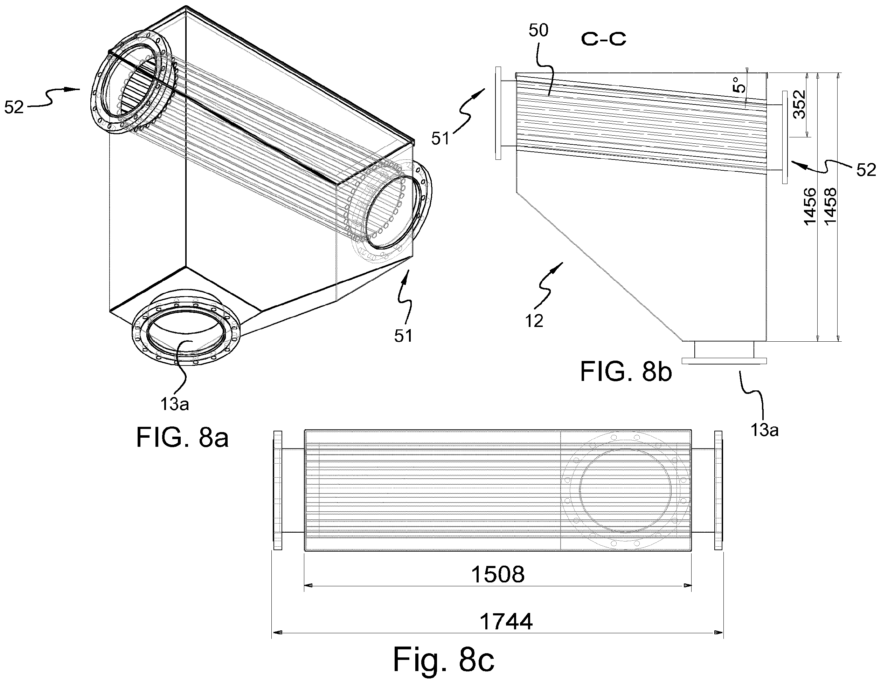

The separation unit 12 is shown in greater details in figure 8a-g. These figures show the separation unit 12 viewed in different angles.

The separation unit 12 has longitudinal ribs 50 extending from an inlet 51 of the separation unit to the outlet 52 of the separation unit 12 as shown in Figure 8a. The ribs 50 could be tubular and acts as a separator to remove the water and parasite mixture from the fish. The ribs 50 in circular application (as a tube) prevents the fish from wriggling out of the separation unit 12 on arrival here. The fish is transported along the longitudinal ribs 50 while the water and parasites or lice that are removed from the fish in previous steps will drop down to the bottom of the separation unit 12 by gravity, between the longitudinal ribs. The fish is thus transported over the separation unit 12 and the water falls down between the ribs 50.

The separation unit 12 could have multiple designs but must be designed in a manner that ensures the separation unit 12 does not flow over. This entails that the separation unit 12 must be designed so that all water is drained from the separation unit 12 before the fish is transported out of the separation unit 12, and that the water does not build up inside the separation unit 12, so that the fish is transported a suitable length without the water and parasite mixture in the separation unit 12 to allow all water to fall down by gravity. The water level in the separation unit 12 must always be below the ribs 50 during the cleaning process.

The length of the ribs 50 must not be too long because the fish is transported without water over the ribs and thus could lose speed and stop completely if the ribs 50 are too long. There could also be a danger of piling up of fish.

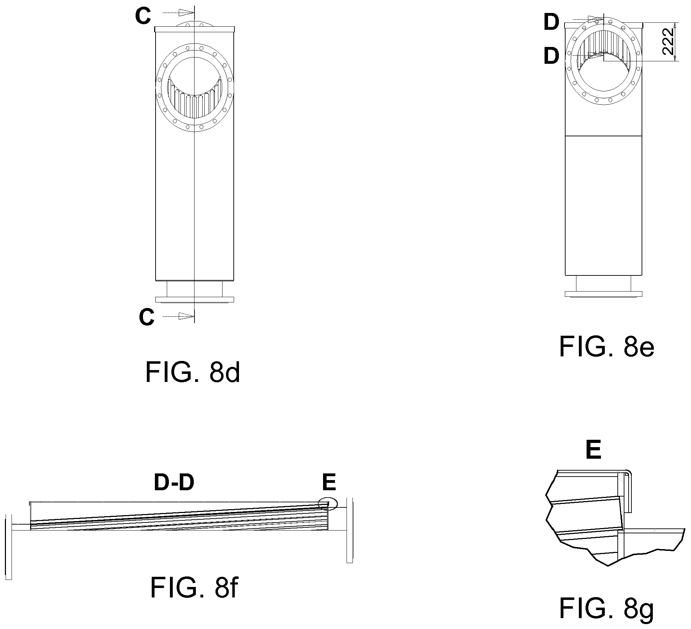

In the figure 8 a-b the ribs are sloping downwardly from the inlet 51 to the outlet 52. This could also reduce the risk of stopping or piling up of fish in the separation unit 12 and is a preferable embodiment of the invention. The inlet 51 and outlet 52 could also be arranged in the same plane and the ribs, and thus extend in substantially horizontally direction between them.

As a illustrative example, the length of the ribs 50 could be 1,5 m, but the ribs 50 could have other lengths suitable for the transport and separation process. This being possible embodiments of the invention.

The water and parasites that is separated from the fish are collected in the bottom of the separation unit 12. At the bottom, there is arranged an outlet 13a which fluidly connects the separation unit 12 with a filter unit 14 to allow the water and parasite mixture to fall and flow by gravity to the filter unit 14.

The outlet 13a could for instance be coupled to a tube or pipeline 13b connecting the separation unit 12 to the filter unit 14. In a possible embodiment of the invention there could be arranged a pump (not shown) to increase the speed and/or amount of water going from separation unit 12 and into the filter unit 14. This can be useful if the capacity of the separation unit 12 must be small due to space limitations or in cases where the separation unit 12 is in danger of overflowing. After the filtration of the water and parasite mixture, the parasites are separated from the water and destructed. The water is now free from lice or parasites and is further led back into the sea.

The filter unit 14 could be a self-cleansing drum filter 14 as shown in Figure 1-3 but other types of filter are possible embodiments of the invention; for instance a redox-filter or a pressure filter.

The filter could for instance have a capacity of 1000 m³ per min, but other capacities are also suitable embodiments of the invention, although the capacity must be in conformity with the capacity of the total amount of water being pumped through the system. The filter 14 should preferably be self-cleansing to avoid clogging of the filter 14 caused by lice or possibly other types of organic material.

In Figure 1-3 there is shown a commonly known drum filter comprising a drum with a small meshed fabric sheath (not shown). The filter 14 comprising further an inlet for the water mixture in the center of the drum, and an outlet for the lice and organic material at the center of the drum at the opposite side. The water in the mixture is led from the center of the chamber through the fine mesh and into a chamber surrounding the drum. The filtered water is then led out of the drum-filter through an outlet.

The filter arrangement must have sufficient filtration capacity and also have small enough mesh size in the filter to prevent any life-stages of lice to pass through the filter 14. Both juvenile, pre-adult and adult lice, as well as strings of eggs must be stopped in the filter. The mesh size must therefore be maximum 300 µm to effective stop the parasites.

Figures 1, 2 and 3 show further a fish outlet 15 arranged in connection with the separation unit 12. The fish outlet 15 could have a shape as a pipeline or tube and is connected to the separation unit 12 at the opposite end than the second pipeline 11 as shown in the Figures.

The pipeline can preferably decrease by 2 inches back to the original pipe size to increase the speed of fish flowing to the new net-cage and thus preventing buildup of fish in the return-hose.

The fish outlet 15 is preferably downward sloping, for instance 45° angle relative to the plane through the separation unit 12.

At the free end of the fish outlet 15, there could be arranged an offloading/return hose 19.

This hose is extending further down into a second net cage (not shown) and submerged into the sea lead the treated and clean fish into the second net cage.

The angle makes sure that the fish do not accumulate in the outlet 15 and/or in the offloading/return hose 19 as may happen if the angle is too small and at the same time provides a gentle transportation into the second net-cage than will be the case if the angle is too steep.

The fish outlet 15 could be of different lengths. In a possible embodiment of the invention, the length is 1 meter, but other lengths are possible embodiments of the invention. A longer fish outlet requires a shorter offload/return hose 19.

Water is supplied through the water supply pipeline 16 that is fluidly coupled to the fish outlet 15. This water supply pipeline 16 is preferably arranged at or near the inlet of the fish outlet 15 to supply water to the fish outlet 15 and the offloading/return hose 19 thus ensuring new water for gentle transportation of the fish into the second net-cage, and prevent any dry transportation of the fish in this part of the system.

The water supply pipeline 16 could in the other end be fluidly coupled to the water supply of the second injection unit 8 where the second sea pipeline 31a, 31b is branched into a supply of water in the injection unit 10a, 10b and a supply of water in the fish outlet 15.

The water supply through the supply pipeline 16 could be regulated by valves 16b. The amount of water supplied to the fish outlet 15 depends on the amount of fish present in this part of the system.

The supplied water could be fresh seawater pumped to the fish outlet 15 by a separate pump or the supplied water could be filtrated water recirculated from the filter 14.

As an illustrative example, the total length of the system according to embodiment of the invention as shown in the Figures is approximately 12 m. This is not limiting for the invention. Other lengths are possible embodiments depending on the design of the individual components and total number of treatment chambers 6a, 6b.

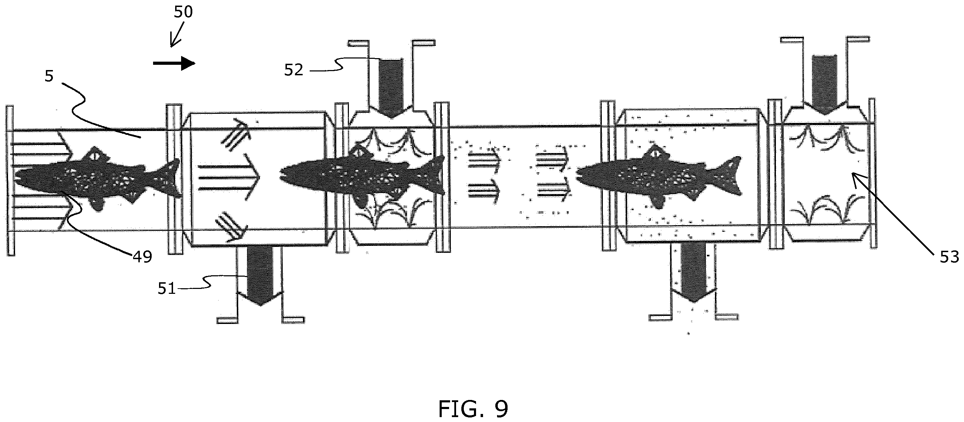

The function of the invention is illustrated in Figure 9 and will be described further below

Prior to the cleaning or removal of parasites, a net cage or similar is arranged in a traditionally known way to aggregate fish in a suitable amount in the net cage. The fish 49 are starved 1-3 days prior to the operation, the number of days depending on the ambient temperature. This is according to standard procedure before treatment and / or major handling of fish.

The fish 49 are then guided into the funnel 55a and loading hose 55 of the system and pumped through the transport pipe 53. The fish 49 is shown flowing through the system with the tail first in the direction of the arrow 50 as indicated in figure 9. Each fish 49 is separately passing the first inspection unit 5a before it enters the first drainage unit 9a where some of the transportation water is removed from the system as indicated by the arrow 51. After passing the first drainage unit 9a, the fish 49 is enters the first injection unit 10a where treatment water is supplied/injected into the transport pipe 53 and towards the fish 49 as indicated by the arrow 52. This process could be repeated again in a second inspection unit 5b, drainage unit 9b and injection unit 10b and so on as many times as practically possible before the fish 49 is transported to the separation unit 12 where the fish 49 is separated from the water and parasite mixture as earlier described. After the separation process, the fish 49 is transported into a new net cage containing only fish 49 that are clean from parasites.

It is the combination of low injection pressure and large amounts of treatment water, rather than a great injection pressure and small amounts of treatment water as it typically will be if nozzles are used, that makes the system gentle for the fish and also makes it possible for the fish to be transported near the slots 43a, 43b that constitutes the inlet of the treatment water into the transport pipe without injuring the fish. There is no need for arrangements to prevent the fish from coming near the slots and it could therefore move freely throughout the whole diameter of the transport pipe, unlike other systems where the pressure of the treatment water is higher and the fish must move in the middle to prevent damage the fish, a feature that requires physical barriers being inserted in the transport pipe to keep fish flowing at a certain distance from the water jets of relatively higher pressure. All components of the transport pipe are design in a manner to minimize risk of injury to the fish.

By draining out some of the water in the drainage unit 9a, 9b, the flow-rate of the transportation water that is passing the injection unit 10a, 10b is reduced, as well as maintaining a constant amount of water in the system at all times.

This has also the effect that the treatment water injected perpendicular to the transport pipe in the injection unit 10a,10b will remain in the injection unit 10a, 10b for some very short but sufficient amount of time before being replaced by new treatment water, instead of being dragged along with the transportation water in the transport pipe immediately.

Some of the treatment water will inevitably mix with the transport water and be dragged along to the next component of the system, some of the treatment water will remain in the injection unit 10a, 10b and some of the treatment water will be dragged backward/upstream towards the drainage unit 9a, 9b and is removed out of the system from the drainage unit 9a, 9b rather than the opposite end of the transport pipe. The fish entering the injection unit 10a, 10b will thus come across a "curtain" of water with a relatively circular opening 47 in the middle as described in figure 7a-c, and at least some of the treatment water is transported backwards/upstream in the opposite direction to the flow of the fish.

The treatment water will act on the fish from behind as the fish passes the "curtain" with the tail first, and by extension also hit the parasites from behind since lice are typically situated with their head towards the head of the fish, and as a consequence the parasites are detached from the fish due to the disruption of its mode/way of attachment to the fish by creating a vacuum chamber between the fish skin and its own body.

The parasites comprising a cephalothorax with an outer membrane called marginal membrane comprising the entire margin of the cephalothorax except in the area of the genital complex, the parasites also comprising a genital complex and medioventrally placed legs.

By functioning of the marginal membrane, the parasites are able to lodge themselves to the surface of the host by creating a vacuum between the surface of the fish and ventral cephalothorax by actively funneling water out from the space between the surface of the fish and the ventral cephalothorax through pores in the dorsal cephalothorax. These pores function as a check valve, only allowing water to be funneled out from beneath the parasite.

A vacuum-chamber is in this way created and sealed by the marginal membrane anterior- laterally, while one pair of the legs seal the vacuum-chamber in the back beneath and adjacent to the genitial complex. The cephalothorax thus has a function as a quite powerful suction cup. The rest of the genital-complex is not attached to the host, but hangs free from the posterior end of the parasite and constitute its posterior body.

A parasite that is attached to a fish is typically positioned with its head facing in an anterior direction, towards the head of the fish. The anterior body of the parasite is attached to the fish by vacuum, and it is difficult to remove the parasite when applying forces upon it in an anterior direction. The posterior body of the parasite is however not attached to the fish and it is therefore much easier to detach the parasite when applying forces in a posterior-anterior direction, as happens when fish pass the injection unit 10.

When the fish meets the "curtain" of treatment water in the injection unit 10, it will continue to move forward due to its size (water pressure not powerful enough to stop the fish in the transport pipe when passing the injection unit). The parasite will on the other hand, due to its small size, be forced to "stop" in this curtain. The posterior body of the parasite will be lifted from the skin of the fish and further the vacuum-created mode of attachment between the skin of the fish and the body of the parasite will be disrupted, causing the parasite to detach from the skin of the fish.

Since the "curtain" hits the fish perpendicular to the transport direction of the fish and the some water flows in both directions in the injection unit, it is not crucial that all the fish are transported with the tail first through the system. Free-swimming parasites will be present in the transportation water and will be removed in both drainage units 9a, 9b and in the separation unit 12. The parasites are further removed from the water in the filter unit 14.

Although illustrative embodiments of the invention have been disclosed in detail herein, with reference to the accompanying drawings, it is understood that the invention is not limited to the precise embodiments shown and that various changes and modifications can be affected therein by one skilled in the art without departing from the scope of the invention as defined by the appended claims.

## Claims

1. A system for removing parasites on fish, said system comprising a transport pipe having an inlet and an outlet, in which transport pipe said fish flow from the inlet to the outlet, a main pump (3), at least one treatment chamber (6a, 6b) and a separation unit (12) along the transportation pipe, said separation (12) unit being arranged downstream of the treatment chamber (6a, 6b), the system further comprising a filter unit (14) fluidly coupled to the separation unit (12), said treatment chamber (6a, 6b) comprising at least one drainage unit (9a, 9b) for removal of fluid and at least one injection unit (10a, 10b) for injection of fluid, said at least one injection unit (10a, 10b) being situated downstream of the drainage unit (9a, 9b) **characterised in that** said injection unit (10a, 10b) has a plurality of slots (43a, 43b) arranged in at least two slots zones (45a, 45b) arranged around the circumference of the injection unit (10a, 10b), said slots (43a, 43b) being staggered relative to each other in the circumferential transverse direction.

2. A system for removing parasites on fish according to claim 1, wherein said slots (43a, 43b) are evenly spaced in the slots zones (45a, 45b).

3. A system for removing parasites on fish according to any of the claim 1-2, wherein said slot zones (45a, 45b) are parallelly arranged around the circumference of the injection unit (10a, 10b).

4. A system for removing parasites on fish according to any one of the claim 1-3, wherein the drainage unit (9a, 9b) has a perforated inner tube.

5. A system for removing parasites on fish according to any one of the claims 1-4, wherein the system further comprises a drainage pump (28a, 28b) for removing fluid from the drainage unit (9a, 9b) and an injection pump (30a, 30b) for supplying fluid to the injection unit (10a, 10b), said drainage pump (28a, 28b) and injection pump (30a, 30b) being independently operable.

6. A system for removing parasites on fish according to claim 5, wherein the injection pump (30a 30b) is designed to allow continuous cavitation.

7. A system for removing parasites on fish according to any one of the preceding claims 1-5, wherein the system further comprises an inspection unit (5a, 5b) for monitoring the fish.

8. A system for removing parasites on fish according to any one of the preceding claims, wherein the system further comprises a counting device (4).

9. A system for removing parasites on fish according to any one of the preceding claims, wherein the drainage unit comprises a camera (32) and/or a light (31) for monitoring the fish through the system.

10. Method for removing parasites from a surface of fish using a system according to any one of the claims 1-9, **characterised in that** said method comprising the following steps:
a) Supplying transportation fluid to the system by a main pump (3),
b) Removing a part of the fluid from the system in the at least one drainage unit (9a, 9b) by at least one drainage pump (28a, 28b),
c) Injecting fluid into the system in the at least one injection unit (10a, 10b) by at least one injection pump (30a, 30b),
d) Separating the fluid and parasite mixture from the fish in the separation unit (12), said separation unit (12) is situated at a higher elevation than the at least one treatment chamber (6a, 6b),
e) Separating the fluid from the parasites in the filter unit (14), said filter unit (14) is fluidly connected to the separation unit (12).

11. Method for removing parasites from the surface of fish according to claim 10, wherein the steps
b) and c) are repeated in additional drainage unit(s) (9a, 9b) and injection unit(s) (10a, 10b) upstream the separation unit (12).

12. Method for removing parasites from the surface of fish according to any one of claims 10-11, wherein the steps further comprise at least one visual inspection of the fish upstream the at least one drainage unit (9a, 9b).

13. Method for removing parasites from the surface of the fish according to any one of claims 10-12, wherein the steps further comprise supply of fluid subsequent to the separation unit (12) downstream the system.

14. Method for removing parasites from the surface of the fish according to any one of claims 10-13, wherein fluid is supplied through the plurality of slots (43a, 43b) arranged in the injection unit (10a, 10b), said fluid is supplied with a pressure between 1.0-5.0 bar.

15. Method for removing parasites from the surface of the fish according to any one of the claims 10-14, wherein the fluid is supplied through at least two circles of slots (45a, 45b) in the injection unit (10a, 10b) said slots (43a, 43b) in the at least two circles of slots (45a, 45b) being staggered relative each other in the circumferential transverse direction.

16. Method for removing parasites from the surface of the fish according to any one of the preceding claims 10-15 , wherein said drainage of fluid from the drainage unit (9a, 9b) is filtrated in the filter unit (14).

## Patentansprüche

1. System zum Entfernen von Parasiten auf Fischen, wobei das System ein Transportrohr mit einem Einlass und einem Auslass, in welchem Transportrohr die Fische vom Einlass zum Auslass strömen, eine Hauptpumpe (3), mindestens eine Behandlungskammer (6a, 6b) und eine Trenneinheit (12) entlang des Transportrohrs umfasst, wobei die Trenneinheit (12) stromabwärts von der Behandlungskammer (6a, 6b) angeordnet ist, wobei das System ferner eine Filtereinheit (14) umfasst, die mit der Trenneinheit (12) fluidisch gekoppelt ist, wobei die Behandlungskammer (6a, 6b) mindestens eine Entwässerungseinheit (9a, 9b) zum Entfernen von Flüssigkeit und mindestens eine Einspritzeinheit (10a, 10b) zum Einspritzen von Flüssigkeit umfasst, wobei die mindestens eine Einspritzeinheit (10a, 10b) stromabwärts von der Entwässerungseinheit (9a, 9b) angeordnet ist, **dadurch gekennzeichnet dass** die Einspritzeinheit (10a, 10b) eine Vielzahl von Schlitzen (43a, 43b) aufweist, die in mindestens zwei Schlitzzonen (45a, 45b) angeordnet sind, die um den Umfang der Einspritzeinheit (10a, 10b) herum angeordnet sind, wobei die Schlitze (43a, 43b) relativ zueinander quer zur Umfangsrichtung versetzt sind.

2. System zum Entfernen von Parasiten auf Fischen nach Anspruch 1, wobei die Schlitze (43a, 43b) in den Schlitzzonen (45a, 45b) gleichmäßig verteilt sind.

3. System zum Entfernen von Parasiten auf Fischen nach Anspruch 1 oder 2, wobei die Schlitzzonen (45a, 45b) parallel um den Umfang der Einspritzeinheit (10a, 10b) angeordnet sind.

4. System zum Entfernen von Parasiten auf Fischen nach einem der Ansprüche 1 bis 3, wobei die Entwässerungseinheit (9a, 9b) ein gelochtes Innenrohr aufweist.

5. System zum Entfernen von Parasiten auf Fischen nach einem der Ansprüche 1 bis 4, wobei das System ferner eine Entwässerungspumpe (28a, 28b) zum Entfernen von Flüssigkeit aus der Entwässerungseinheit (9a, 9b) und eine Einspritzpumpe (30a, 30b) zum Zuführen von Fluid zu der Einspritzeinheit (10a, 10b) umfasst, wobei die Entwässerungspumpe (28a, 28b) und die Einspritzpumpe (30a, 30b) unabhängig voneinander betreibbar sind.

6. System zum Entfernen von Parasiten auf Fischen nach Anspruch 5, wobei die Injektionspumpe (30a 30b) so ausgelegt ist, dass sie eine kontinuierliche Kavitation ermöglicht.

7. System zum Entfernen von Parasiten auf Fischen nach einem der vorhergehenden Ansprüche 1 bis 5, wobei das System ferner eine Inspektionseinheit (5a, 5b) zum Überwachen der Fische umfasst.

8. System zum Entfernen von Parasiten auf Fischen nach einem der vorhergehenden Ansprüche, wobei das System ferner eine Zählvorrichtung (4) umfasst.

9. System zum Entfernen von Parasiten auf Fischen nach einem der vorhergehenden Ansprüche, wobei die Entwässerungseinheit eine Kamera (32) und/oder ein Licht (31) zum Überwachen der Fische durch das System umfasst.

10. Verfahren zum Entfernen von Parasiten von einer Fischoberfläche unter Verwendung eines Systems nach einem der Ansprüche 1 bis 9, **dadurch gekennzeichnet, dass** das Verfahren die folgenden Schritte umfasst:
a) Zuführen von Förderflüssigkeit zum System durch eine Hauptpumpe (3),
b) Entfernen eines Teils der Flüssigkeit aus dem System in der mindestens einen Entwässerungseinheit (9a, 9b) durch mindestens eine Entwässerungspumpe (28a, 28b),
c) Einspritzen von Flüssigkeit in das System in der mindestens einen Einspritzeinheit (10a, 10b) durch mindestens eine Einspritzpumpe (30a, 30b),
d) Trennen der Mischung aus der Flüssigkeit und den Parasiten von den Fischen in der Trenneinheit (12), wobei sich die Trenneinheit (12) höher als die mindestens eine Behandlungskammer (6a, 6b) befindet,
e) Trennen der Flüssigkeit von den Parasiten in der Filtereinheit (14), wobei die Filtereinheit (14) mit der Abscheideeinheit (12) fluidisch verbunden ist.

11. Verfahren zum Entfernen von Parasiten von der Fischoberfläche nach Anspruch 10, wobei die Schritte b) und c) in zusätzlichen Entwässerungseinheiten (9a, 9b) und Einspritzeinheiten (10a, 10b) stromaufwärts von der Separationseinheit (12) wiederholt werden.

12. Verfahren zum Entfernen von Parasiten von der Oberfläche von Fischen nach einem der Ansprüche 10 bis 11, wobei die Verfahrensschritte ferner mindestens eine Sichtprüfung der Fische stromaufwärts von der mindestens einen Entwässerungseinheit (9a, 9b) umfassen.

13. Verfahren zum Entfernen von Parasiten von der Oberfläche von Fischen nach einem der Ansprüche 10 bis 12, wobei die Verfahrensschritte ferner die Zufuhr von Flüssigkeit nach der Trenneinheit (12) stromabwärts des Systems umfassen.

14. Verfahren zum Entfernen von Parasiten von der Oberfläche von Fischen nach einem der Ansprüche 10 bis 13, wobei die Flüssigkeit durch die Vielzahl von Schlitzen (43a, 43b) zugeführt wird, die in der Einspritzeinheit (10a, 10b) angeordnet sind, wobei die Flüssigkeit mit einem Druck zwischen 1,0-5,0 bar zugeführt wird.

15. Verfahren zum Entfernen von Parasiten von der Oberfläche von Fischen nach einem der Ansprüche 10 bis 14, wobei die Flüssigkeit durch mindestens zwei Kreise von Schlitzen (45a, 45b) in der Einspritzeinheit (10a, 10b) zugeführt wird, wobei die Schlitze (43a, 43b) in den mindestens zwei Kreisen von Schlitzen (45a, 45b) quer zur Umfangsrichtung zueinander versetzt sind.

16. Verfahren zum Entfernen von Parasiten von der Oberfläche von Fischen nach einem der vorhergehenden Ansprüche 10 bis 15, wobei der Abfluss der Flüssigkeit aus der Entwässerungseinheit (9a, 9b) in der Filtereinheit (14) gefiltert wird.

## Revendications

1. Système d'élimination de parasites sur du poisson, ledit système comprenant un tuyau de transport ayant une entrée et une sortie, tuyau de transport dans lequel ledit poisson circule de l'entrée à la sortie, une pompe principale (3), au moins une chambre de traitement (6a, 6b) et une unité de séparation (12) le long du tuyau de transport, ladite unité de séparation (12) étant agencée en aval de la chambre de traitement (6a, 6b), le système comprenant en outre une unité de filtrage (14) couplée de manière fluidique à l'unité de séparation (12), ladite chambre de traitement (6a, 6b) comprenant au moins une unité de drainage (9a, 9b) pour une élimination de fluide et au moins une unité d'injection (10a, 10b) pour une injection de fluide, ladite au moins une unité d'injection (10a , 10b) étant située en aval de l'unité de drainage (9a, 9b), **caractérisé en ce que** ladite unité d'injection (10a, 10b) présente une pluralité de fentes (43a, 43b) agencées dans au moins deux zones de fentes (45a, 45b) agencées autour de la circonférence de l'unité d'injection (10a, 10b), lesdites fentes (43a, 43b) étant étagées les unes par rapport aux autres dans la direction transversale circonférentielle.

2. Système d'élimination de parasites sur du poisson selon la revendication 1, dans lequel lesdites fentes (43a, 43b) sont espacées de manière régulière dans les zones de fentes (45a, 45b).

3. Système d'élimination de parasites sur du poisson selon l'une quelconque des revendications 1 et 2, dans lequel lesdites zones de fentes (45a, 45b) sont agencées parallèlement autour de la circonférence de l'unité d'injection (10a, 10b).

4. Système d'élimination de parasites sur du poisson selon l'une quelconque des revendications 1 à 3, dans lequel l'unité de drainage (9a, 9b) a un tube intérieur perforé.

5. Système d'élimination de parasites sur du poisson selon l'une quelconque des revendications 1 à 4, dans lequel le système comprend en outre une pompe de drainage (28a, 28b) pour retirer du fluide à partir de l'unité de drainage (9a, 9b) et une pompe d'injection (30a, 30b) pour fournir du fluide à l'unité d'injection (10a, 10b), ladite pompe de drainage (28a, 28b) et ladite pompe d'injection (30a, 30b) pouvant fonctionner indépendamment.

6. Système d'élimination de parasites sur du poisson selon la revendication 5, dans lequel la pompe d'injection (30a, 30b) est conçue pour permettre une cavitation continue.

7. Système d'élimination de parasites sur du poisson selon l'une quelconque des revendications précédentes 1 à 5, dans lequel le système comprend en outre une unité d'inspection (5a, 5b) pour surveiller le poisson.

8. Système d'élimination de parasites sur du poisson selon l'une quelconque des revendications précédentes, dans lequel le système comprend en outre un dispositif de comptage (4).

9. Système d'élimination de parasites sur du poisson selon l'une quelconque des revendications précédentes, dans lequel l'unité de drainage comprend une caméra (32) et/ou une lumière (31) pour surveiller le poisson à travers le système.

10. Procédé d'élimination de parasites d'une surface de poisson utilisant un système selon l'une quelconque des revendications 1 à 9, **caractérisé en ce que** ledit procédé comprend les étapes suivantes consistant à :
a) alimenter le système en fluide de transport par l'intermédiaire d'une pompe principale (3),
b) retirer du système une partie du fluide jusque dans la au moins une unité de drainage (9a, 9b) à l'aide d'au moins une pompe de drainage (28a, 28b),
c) injecter du fluide dans le système dans la au moins une unité d'injection (10a, 10b) à l'aide d'au moins une pompe d'injection (30a, 30b),
d) séparer le mélange de fluide et de parasites du poisson dans l'unité de séparation (12), ladite unité de séparation (12) étant située à une hauteur supérieure à la au moins une chambre de traitement (6a, 6b),
e) séparer le fluide des parasites dans l'unité de filtrage (14), ladite unité de filtrage (14) étant connectée de manière fluidique à l'unité de séparation (12).

11. Procédé d'élimination de parasites d'une surface de poisson selon la revendication 10, dans lequel les étapes b) et c) sont répétées dans une ou plusieurs unités de drainage (9a, 9b) et une ou plusieurs unités d'injection (10a, 10b) supplémentaires en amont de l'unité de séparation (12).

12. Procédé d'élimination de parasites d'une surface de poisson selon l'une quelconque des revendications 10 à 11, dans lequel les étapes comprennent en outre au moins une inspection visuelle du poisson en amont de la au moins une unité de drainage (9a, 9b).

13. Procédé d'élimination de parasites d'une surface de poisson selon l'une quelconque des revendications 10 à 12, dans lequel les étapes comprennent en outre la fourniture de fluide après l'unité de séparation (12) en aval du système.

14. Procédé d'élimination de parasites d'une surface de poisson selon l'une quelconque des revendications 10 à 13, dans lequel du fluide est fourni à travers la pluralité de fentes (43a, 43b) aménagées dans l'unité d'injection (10a, 10b), ledit fluide étant fourni à une pression comprise entre 1,0 et 5,0 bars.

15. Procédé d'élimination de parasites d'une surface de poisson selon l'une quelconque des revendications 10 à 14, dans lequel du fluide est alimenté à travers au moins deux cercles de fentes (45a, 45b) dans l'unité d'injection (10a, 10b), lesdites fentes (43a, 43b) des au moins deux cercles de fentes (45a, 45b) étant étagées les unes par rapport aux autres dans la direction transversale circonférentielle.

16. Procédé d'élimination de parasites d'une surface de poisson selon l'une quelconque des revendications précédentes 10 à 15, dans lequel ledit drainage de fluide à partir de l'unité de drainage (9a, 9b) est filtré dans l'unité de filtrage (14).
